# EUROPEAN PATENT SPECIFICATION

(11) **EP 3 067 397 B1**
(45) Date of publication and mention of the grant of the patent: **30.12.2020**
(21) Application number: 16159785.1
(22) Date of filing: 11.03.2016
(51) Int. Cl.: C09D 11/102, C09D 11/104, C09D 11/30

(54) **INK COMPOSITION FOR DEFLECTED CONTINUOUS INK JET PRINTING NOTABLY ON ORGANIC POLYMERS SUBSTRATES**
TINTENZUSAMMENSETZUNG FÜR ABGELENKTEN KONTINUIERLICHEN TINTENSTRAHLDRUCK INSBESONDERE AUF ORGANISCHEN POLYMERSUBSTRATEN
COMPOSITION D'ENCRE POUR L'IMPRESSION PAR JET CONTINU DEVIE NOTAMMENT SUR DES SUBSTRATS EN POLYMERES ORGANIQUES

(30) Priority: 13.03.2015 FR 1552078
(43) Date of publication of application: 14.09.2016
(73) Proprietor: Dover Europe Sàrl, 1214 Vernier (CH)
(72) Inventor: GOUSTIAUX, Cécile, 38160 SAINT-MARCELLIN (FR); BATAILLE, Antoine, 26270 LORIOL (FR); JEAN, Yannick, 26000 VALENCE (FR)
(74) Representative: Brevalex

(56) References cited:
- FR-A1- 2 997 956
- Ag Bev: "Product Selection Rosin Resins", , 1 October 2014 (2014-10-01), XP055231107, Retrieved from the Internet: URL:https://web.archive.org/web/2014112911 2607/http://www.pinovasolutions.com/upload s/files/resources/pinova-product-selection -guide.pdf [retrieved on 2015-11-25]
- Anonymous: "Tackifier - Wikipedia, the free encyclopedia", , 9 January 2015 (2015-01-09), XP055231207, Retrieved from the Internet: URL:https://web.archive.org/web/2015010910 4755/http://en.wikipedia.org/wiki/Tackifie r [retrieved on 2015-11-25]

## Description

The invention relates to an ink composition for which the properties are particularly suitable for marking or printing with a liquid jet, and most particularly for marking with a deflected continuous ink jet.

The ink composition according to the invention may be used for marking substrates, supports and objects of any kinds.

The ink composition according to the invention is notably suitable for marking substrates, supports, and objects made of organic polymers, in particular made of thermoplastic polymers (« plastic materials »), such as polyolefins like polyethylenes (PE) or polypropylenes (PP), or further poly(ethylene terephthalate) (PET). The ink composition according to the invention is most particularly suitable for marking bottles, packages, flasks or trays made of organic polymers, notably made of polyolefins, such as polyethylenes or polypropylenes.

An opaque variant for example of white or pale color, of the ink composition according to the invention is also suitable for marking black substrates or of a dark color, for example for marking black tubes and cables or of dark color.

The ink composition according to the invention gives the possibility of obtaining markings notably resistant to friction and to customary solvents such as ethanol, and adherents i.e. successfully undergoing the detachment test with an adhesive tape.

Ink jet printing is a well-known technique, which allows printing, marking or decoration of any kinds of objects, at high speed, and without contact of these objects with the printing device, variable messages at will, such as bar codes, best before dates, etc. and this even on non-planar supports.

Ink jet printing techniques are divided in two great types, i.e.: the so-called *"Drop on Demand"* or (*DOD*) technique and the so-called *"Continuous Ink Jet"* or (*CIJ*) technique.

We shall be more particularly interested in the latter technique, more specifically in the deflected continuous jet technique.

Deflected continuous jet projection consists of sending under pressure ink in a cavity containing a piezo-electric crystal, wherefrom the ink escapes through an orifice (nozzle) as a jet.

The piezo-electric crystal, vibrating at a determined frequency, causes pressure perturbations in the ink jet, which oscillates and gradually breaks up into spherical drops or droplets. An electrode, placed on the path of the jet, there where it breaks up, gives the possibility of giving these drops an electrostatic charge, if the ink is conductive. The thereby charged drops are deflected in an electric field and allow printing. The non-charged drops, therefore not deflected, are recovered in a gutter where the ink is sucked up, and then recycled towards the ink circuit.

This type of ink jet projection ensures contactless marking at a high running speed over objects which are not necessarily planar and with the possibility of changing message at will.

The technique is particularly suitable for marking and identifying (expiry dates, series numbers, batch numbers, barcode numbers etc.) industrial products on production lines.

The ink compositions suitable for projection, printing, by the deflected continuous jet technique, have to meet a certain number of criteria inherent to this technique, relating, *inter alia,* to the viscosity, the electric conductivity, the solubility in a solvent for cleaning, the compatibility of the ingredients, the proper wetting of the supports to be marked, etc.

Particular and important criteria which should be met by the ink compositions for printing with the deflected continuous jet technique, stem from the fact that ink consumption is low when the number of printed characters per message is small, on the one hand, and from the fact that the jet is continuous and that ink recirculates many times before being projected on the other hand. Consequently, the ink is in contact with ambient air during the suction of non-deflected drops, and it may be led to absorbing ambient humidity or to reacting with the oxygen of the air, and it may thus be modified.

In spite of this situation, the ink will have to retain its essential properties both during storage, and during its circulation in the printer.

Finally, these inks should dry rapidly, be capable of passing through the nozzle without clogging it, with great stability of orientation of the jet while allowing easy cleaning of the print head.

The ingredients which make up present inks, for the ink jet of the deflected continuous jet type, are organic or mineral products; these are coloring materials, such as coloring agents or pigments, resins or binders, in more or less volatile solvent(s) or in water, optionally conductivity salt(s), as well as diverse additives.

The coloring materials are called « dyes or pigments », depending on whetherthey are respectively soluble or insoluble in the solvent used.

Pigments, naturally insoluble, are therefore dispersed and may be opaque or not. They provide the ink with its color, its opacity, or particular optical properties, such as fluorescence (cf. patents or patent applications US-A-4,153,593, US-A-4,756,758, US-A-4,880,465, EP-A-0 289 141, US-A-5,395,432, GB-A-2,298,713). In certain cases, the coloring agents also provide themselves sufficient conductivity to the ink so that there is no need to add a conductivity salt. The coloring agents known under the name of C. I. Solvent Black 27, 29, 35 and 45 are in this case.

The binder(s) or resin(s) is(are) generally mostly solid and polymeric compound(s) and their selection is dictated by their solubility in the selected solvents and by their compatibility with the coloring agents and the other additives, but also and especially according to the properties which they provide to the ink film, once it is dry (see patents and patent applications US-A-4,834,799, GB-A-2,286,402, US-A-5,594,044, US-A-5,316,575, WO-A-96/23844, WO-A-95/29287).

Their primary function is to provide the ink with adherence on the maximum of supports or on specific supports, for example non-porous supports. They also give the possibility of giving the ink the adequate viscosity for forming drops from the jet and they provide to the ink, or rather to the obtained marking, the essential of its properties of resistance to physical and/or chemical aggressions, in particular resistance to friction, to detachment with an adhesive tape ("Scotch®"), or the resistance to other customary solvents such as ethyl alcohol.

The solvents of these inks most frequently consist of a mixture comprising in majority an amount of volatile and not very viscous solvents on the one hand in order to allow very rapid drying of the markings and to adjust the viscosity to the desired value, for example from 2 to 10 mPa.s and, more viscous and less volatile solvents with slower drying, in a lesser amount on the other hand in order to avoid drying of the ink in the nozzle during the stopping phases of the printing apparatus (cf. patent or patent applications US-A-4,155,767, WO-A-92 14794, WO-A-92 14 795 and US-A-4,260,531).

The most often used volatile solvents are alcohols, ketones or esters with low molecular weight, as this is indicated in patents US-A-4,567,213, and US-A-5,637,139. From among these solvents, mention may essentially be made of methanol, ethanol, 1- and 2-propanol, acetone, methyl ethyl ketone ("MEK"), methyl isobutyl ketone, ethyl acetate, and tetrahydrofurane.

Less volatile solvents notably having a drying retardant function are most often ketones, such as cyclohexanone, glycol ethers, mentioned in documents US-A-4,024,096 and US-A-4,567,213, ethers and acetals, such as furane or dioxane, mentioned in document US-A-4,155,767, dimethyl formamide or dimethylsulfoxide (US-A-4,155,895), lactones (EP-A-0 034 881), N-methyl pyrrolidone (EP-A-0 735 120), glycols (WO-A-96 23844), and even aliphatic hydrocarbons (US-A-4,166,044) or further water, alone or in combination with other solvents, mentioned above, on this subject reference will be made to documents US-A-4,153,593, GB-A-2,277,094 and FR-A-2 460 982.

Generally, the main or majority solvents of the inks for projection with a deflected continuous jet should meet a certain number of criteria, in particular:
- their volatility should be sufficient so that the ink rapidly dries on the support to be marked, but not too large, so as not to evaporate too rapidly in the printer, in particular during the standstill phases;
- their solvent power, towards binders of the ink, dyes or pigment dispersions and towards supports to be printed, should give the possibility of giving good adherence to the dry ink;
- their effects on the health of persons, i.e. their toxicity, noxiousness, irritating nature and inflammability, should be reduced;
- they should give the possibility of maintaining sterile an ink optionally intended to be ingested;
- finally, they should have the capability of maintaining ion species dissolved and dissociated such as the salts which give the ink its electric conductivity.

The optional conductivity salt(s) provide(s) the ink with the conductivity required for electrostatic deflection. On this subject, reference may be made to document US-A-4,465,800.

The additives comprise dispersants which allow dispersion of the pigments, surfactants which modify the wetting or penetrating power of the ink (US-A-5,395,431), in particular those which modify or regulate the static or dynamic surface tension, such as Fluorad® FC 430 from 3M®, agents which inhibit corrosion induced by the salts which provide the aforementioned conductivity (see documents EP-A-0 510 752, US-A-5,102,458), or further additives which protect the ink against proliferations of bacteria and of other micro-organisms: these are biocides, bactericides, fungicides and others, particularly useful in inks containing water, pH regulating buffers (see EP-A-0 735 120), anti-foaming agents.

Moreover, it is known that the traceability of products such as food, pharmaceutical or medical products require that diverse pieces of information should be printed on the package of these products.

Affixing markings on beverage bottles, or packages of cosmetic products, and notably on stoppers or bottles in plastic materials, for example made of polyolefins and notably made of polyethylene pose problems which are particularly difficult to solve, notably in the case when the markings should resist not only to the liquids contained in these packages, but also to the inevitable friction from the user.

In order to guarantee traceability of the production, the bottles are generally marked on the stopper or on the bottom of the bottle, or at any other location, with a corresponding piece of information, immediately after filling.

The deflected continuous ink jet technology is with marking with a CO₂ laser the most suitable technique for this high-rate marking on these curved surfaces, of variable information.

For such applications, the ink for deflected continuous jet printing and the deposited marking should meet particular requirements, which are notably the following:
- the ink should dry very rapidly when the production rates are significant;
- the marking should resist handling by the consumer during the whole duration for consuming the contents of the package, such as a bottle;
- the marking should resist to liquids contained in the packages such as alcoholic solutions;
- the marking should resist to friction;
- the marking should be adherent.

In order to test the adherence of the markings, the test with the adhesive tape a so-called « Scotch® test » is applied very commonly. It consists of applying an adhesive on the marking and then of removing this adhesive. The test is positive when the marking remains on the object and is not transferred to the adhesive.

In order to obtain adherence and also satisfactory resistance of the markings obtained with the ink compositions projected with an ink jet on the substrate, such as packages, made of organic polymers, notably made of plastic materials, and in particular on polyolefin substrates, for example made of polyethylenes or polypropylenes, it is presently necessary to carry out a surface treatment of the substrate such as a flame treatment or a corona treatment, and/or include in the ink composition halogenated compounds, notably chlorinated compounds such as resins based on vinyl chloride.

Document FR-A1-2 997 956 is related to an ink composition for continuous deflected ink jet printing which is liquid at room temperature, comprising:
a) A solvent comprising, preferably consisting of, one or more organic solvent compound(s), and optionally water.
b) A binder, comprising a saturated copolyester resin and a terpene-phenol resin;
c) A compound having an ethylenically unsaturated double bond and a silicon chain;
d) Optionally one or more dyes and/or pigment(s).

Therefore there exists a need for an ink composition for printing with the deflected continuous ink jet technique which gives markings having notably satisfactory adherence, or even improved adherence with respect to known ink compositions, on the substrates, such as cables, pipes or packages, made of organic polymers, notably made of plastic materials, and in particular on substrates made of polyolefins, for example made of polyethylenes or polypropylenes, without it being necessary to carry out a surface treatment of the substrate, like a flame treatment or a corona treatment, and/or include in the ink composition halogenated compounds, notably chlorinated compounds, like resins based on vinyl chloride.

Therefore, in particular, there exists a need for ink compositions for printing with the deflected continuous jet technique which gives markings having satisfactory adherence (generally determined by the so-called « adhesive tape » test), or even improved with respect to known ink compositions, on said substrates, but which are free of halogenated compounds, notably chlorinated compounds, like resins based on vinyl chloride, these ink compositions further give the possibility of obtaining more resistant markings, notably to friction and to alcohol.

The goal of the invention is to provide an ink composition suitable for deflected continuous ink jet printing which *inter alia* meets the whole of the needs, requirements and criteria indicated above, and which does not have the drawbacks, limitations, defects and disadvantages of the ink compositions of the prior art, and which overcomes the problems of the ink compositions of the prior art.

This goal and further others are achieved, according to the invention with an ink composition for deflected continuous ink jet printing, liquid at room temperature, comprising:
a) a solvent comprising, preferably consisting of, one or several organic solvent compound(s), and optionally water;
b) a binder, comprising at least one polyester resin prepared by polymerization of terephthalic acid, isophthalic acid, neopentyl glycol, and ethylene glycol;
c) optionally one or several dye(s) and/or pigment(s);
said ink composition further comprising a resin derived from rosin.

By « room temperature », is generally meant a temperature from 5°C to 30°C, preferably from 10°C to 25°C, still preferably from 15°C to 24°C, better from 20°C to 23°C. It is quite obvious that the ink is liquid at atmospheric pressure.

Advantageously, said ink composition is free of halogenated compounds.

By «free of halogenated compounds », is generally meant that the ink composition according to the invention comprises less than 0.1% by weight, or even 0% by weight, of the total weight of the ink composition, of halogenated compounds.

The ink composition according to the invention is notably free of chlorinated compounds, such as resins based on vinyl chloride such as poly(vinyl chloride) (PVC).

Let us specify that the electric conductivity is measured with a commercial instrument and according to the principle well-known to the man skilled in the art, for example described on the site: http://fr.wikipedia.org/wiki/Conductim%C3%A9trie.

The electric conductivity may be measured according to the following standard:
ASTM D1125 - 14: Standard Test Methods for Electrical Conductivity and Resistivity of Water.

The electric conductivity may be measured for example with a commercially available conductimeter of the Radiometer® Company.

The viscosity may be measured according to the following standard:
DIN 53019 -1: Measurements of viscosities and flow curves by means of rotational viscometers.

The dynamic viscosities may be measured for example by means of a viscometer with coaxial cylinders, such as the viscometer with coaxial cylinders of the *"Couette"* type of the Contraves® Company.

The ink composition according to the invention is fundamentally distinguished from the ink compositions according to the prior art in that it comprises a binder, comprising at least one polyester resin, which is a highly specific resin prepared by polymerization of four specific monomers, i.e. terephthalic acid, isophthalic acid, neopentyl glycol and ethylene glycol.

The incorporation of such a polyester resin into the binder of an ink composition suitable for deflected continuous ink jet printing is neither described nor suggested in the prior art.

This polyester resin is specific in that it is prepared from 4 specific monomers, i.e. two specific diacids and two specific diols, all these monomers being present in the polymerization mixture and then forming the polyester resin.

These polyester resins prepared from two diacids and from 2 diols are amorphous and therefore soluble in organic solvents, contrary to crystalline polymers which are insoluble in organic solvents.

A polyester resin which may be included into the composition according to the invention is for example the resin available under the name of Vylon GK 250® from Toyobo Vylon. This polyester is actually a copolymer of at least both aforementioned diacids, i.e. terephthalic acid and isophthalic acid with at least both aforementioned diols, i.e. neopentyl glycol and ethylene glycol.

The ink composition according to the invention *inter alia* meets the needs and requirements mentioned above, and provides a solution to the problems of the ink compositions of the prior art.

According to the invention, it was notably seen surprisingly that the presence in the binder of the ink composition according to the invention of the specific polyester resin described above gave the possibility of obtaining ink compositions for ink jet printing with the deflected continuous ink jet technique which gives markings whose adherence (generally determined by the so-called « adhesive tape » test), on organic polymers, notably plastic materials, and in particular on polyolefins, for example polyethylenes or polypropylenes, is higher than the adherence of the markings obtained with the ink compositions of the prior art, and this without it being necessary to subject beforehand the substrate to a surface treatment and optionally to include halogenated compounds, such as resins based on vinyl chloride, in the ink composition.

The ink compositions according to the invention, for which the binder comprises the specific polyester resin described above surprisingly give also the possibility, of obtaining markings which are more resistant, notably to friction and to alcohol, in particular, on organic polymers, notably plastic materials, and in particular on polyolefins, for example polyethylenes or polypropylenes, than the markings obtained with the ink compositions of the prior art which do not comprise a binder containing the specific polyester resin described above.

It did not ensue obviously from the known ink compositions that the application in the binder of the specific polyester resin described above, could provide the markings with particularly good adherence notably on the substrates made of organic polymers, notably made of plastic materials, and in particular made of polyolefins, for example made of polyethylenes or polypropylenes, as well as excellent resistance to friction and to solvents like ethanol; this particularly good adherence as well as this excellent resistance to friction and to solvents being better than the adherence and resistance to friction obtained with ink compositions which do not comprise said specific polyester resin.

The binder of the ink composition according to the invention further comprises a resin derived from rosin.

The resin derived from rosin may be a glycerol and rosin ester, for example the resin Bremasin®1380 from Kraemer®.

The binder of the ink composition according to the invention further comprising a resin derived from rosin, is a highly specific binder which comprises a combination of two specific compounds i.e. the combination of a polyester resin, and of a resin derived from rosin which has never been described nor suggested in the prior art.

Advantageously, the binder of the ink composition according to the invention may further comprise a polyol resin.

By polyol resin is meant a resin including free hydroxyl groups OH.

The polyol resin may be a hydrogenated copolymer of acetophenone and of formaldehyde, like the resin Variplus SK® from Tego®.

In the case when the binder of the ink composition according to the invention further comprises a polyol resin, the binder of the ink composition according to the invention is a highly specific binder which comprises a combination of two specific compounds, i.e. a combination of a polyester resin and of a polyol resin which has never been described nor suggested in the prior art.

The binder of the composition according to the invention may comprise the specific polyester resin described above, the resin derived from rosin, and the polyol resin, i.e. all these three resins.

An ink composition for printing with a deflected continuous jet, the binder of which comprises the combination of these three specific resins, has never been described nor suggested in the prior art.

The ink composition according to the invention when it comprises a binder which comprises the specific polyester as described above and further a resin derived from rosin or a polyol resin, *a fortiori, inter alia,* meets the needs and requirements mentioned above, and provides a solution to the problems of the ink compositions of the prior art.

According to the invention, it was notably observed surprisingly that the specific combination of two specific compounds in the binder, i.e. the specific polyester resin described above, and a resin derived from rosin or a polyol resin, gave the possibility of obtaining ink compositions for printing with an ink jet, by the deflected continuous ink jet technique, which gives markings, the adherence of which (generally determined by the so-called « adhesive tape » test), on organic polymers, notably plastic materials, and in particular on polyolefins, for example polyethylenes or polypropylenes, is higher than the adherence of the markings obtained with the ink compositions of the prior art, but also generally higher than the adherence of the markings obtained with the ink compositions, the binder of which only comprises the aforementioned specific polyester resin, and this without it being necessary to subject beforehand the substrate to a surface treatment and optionally to include halogenated compounds, such as resins based on vinyl chloride, in the ink composition.

The ink compositions according to the invention, the binder of which comprises the combination of the specific polyester resin described above, and of a resin derived from rosin or of a polyol resin, also surprisingly gives the possibility of obtaining markings which are more resistant, notably to friction and to alcohol, in particular on organic polymers, notably plastic materials and in particular on polyolefins, for example polyethylenes or polypropylenes, than the markings obtained with the ink compositions of the prior art, but also generally than the markings obtained with the ink compositions, the binder of which only comprises the aforementioned specific polyester resin.

It did not ensue obviously from the known ink compositions that the combination of the 2 types of binder mentioned earlier, may provide the markings with particularly good adherence -and even further improved adherence with respect to the ink compositions, the binder of which only comprises the specific aforementioned polyester resin- notably on substrates made of organic polymers, notably made of plastic materials, and in particular made of polyolefins, for example made of polyethylenes or made of polypropylenes, as well as with an excellent resistance -and even a further improved resistance as compared with the ink compositions, the binder of which only comprises the aforementioned specific polyester resin- to friction and to solvents like ethanol.

The ink composition according to the invention when it comprises a binder which comprises the specific polyester as described above and further a resin derived from rosin and a polyol resin, i.e. the three aforementioned resins, *a fortiori, inter alia,* meets the needs and requirements mentioned above and provides a solution to the problems of the ink compositions of the prior art.

The ink composition for ink jet printing with the deflected continuous jet technique according to the invention when the binder comprises the specific combination of the three aforementioned specific resins, i.e. the polyester resin, the resin derived from rosin and the polyol resin, surprisingly gives the possibility of obtaining markings for which the adherence and the resistance, notably to friction are further improved with respect to the ink compositions, the binder of which only contains the polyester resin or the polyester resin combined with a resin derived from rosin or a polyol resin.

It did not ensue obviously from the known ink compositions that the combination of the 3 aforementioned resin types could provide the markings with particularly good - and even further improved adherence- notably on the substrates made of organic polymers, notably made of plastic materials, and in particular made of polyolefins, for example made of polyethylenes or polypropylenes, as well as with an excellent -and even further improved- resistance to friction and to solvents like ethanol.

Thus, document US-A-4,207,577 describes opaque ink compositions for ink jet printing which comprise resins. Among the very many resins mentioned are incidentally mentioned polyester resins and rosin resins in a general way.

The exact nature of these polyester resins is not specified.

In particular, the highly specific polyester resin of the binder of the ink composition according to the invention is neither described nor suggested in this document.

Further, the particular combination of the specific polyester resin of the binder of the ink composition according to the invention, with a rosin resin and/or with a polyol resin is by no means described or suggested in this document.

Moreover, the ink composition of this document may also comprise chlorinated resins such as poly(vinyl chloride), poly(vinylidene chloride) and chlorinated rubbers.

Document US-B2-7,022,172 relates to an ink composition for ink jet printing which notably comprises a resin and a dispersant. Among the very many resins mentioned, rosin resins are incidentally mentioned. The dispersant is in particular a polyester-amine.

In this document there is no mention nor any suggestion that the ink composition which is described therein, may comprise a polyester, and even less the highly specific polyester, present in the ink composition according to the invention, in combination with a rosin resin.

Further there is no mention nor any suggestion in this document that the ink composition which is described therein, may further comprise a polyol resin such as the one advantageously present in the ink composition according to the invention.

Further, the ink composition of this document may comprise chlorinated resins like vinyl chloride-acetate resins.

Documents US-B2-7,132,014, US-B2-7,132,013, and US-B2-7,014,698 relate to pigmented ink compositions for ink jet printing which contain a pigment, a polymer and an organic solvent comprising a poly(alkylene glycol) derivative and a nitrogen-containing heterocyclic compound. The polymer may be a binder resin selected from acrylic resins, polyester resins, polyurethane resins, vinyl chloride resins and cellulose resins.

The exact nature of the polyester resin is not specified and there is no mention nor any suggestion in these documents that this polyester resin may be a specific polyester resin such as the one present in the ink composition according to the invention.

Further there is no mention or any suggestion in these documents, that the ink compositions which are described therein, may further comprise a resin derived from rosin such as the one advantageously present in the ink composition according to the invention.

Further there is no mention or any suggestion in these documents that the ink compositions which are described therein, may further comprise a polyol resin like the one advantageously present in the ink composition according to the invention.

Further, the ink compositions of these documents may comprise vinyl chloride resins.

According to a fundamental aspect of the invention, the ink compositions according to the invention give markings, resistant to friction, resistant to the adhesive tape (« Scotch ®») test, and to friction in the presence of alcohol.

Preferably, the ink compositions according to the invention do not contain any chlorinated compound like the resins based on vinyl chloride.

Advantageously, the ink composition according to the invention may comprise from 0.1% to 30% by weight, preferably from 5% to 20% by weight, of the total weight of the ink composition, of the polyester resin.

Advantageously, the ink composition according to the invention may comprise from 0.1% to 20% by weight, preferably from 1% to 15% by weight, of the total weight of the ink composition, of resin derived from rosin.

Advantageously, the ink composition according to the invention may comprise from 0.1% to 25% by weight, preferably from 2% to 10% by weight, of the total weight of the ink composition, of the polyol resin.

The binder comprises the polyester resin, optionally the resin derived from rosin and/or optionally the polyol resin.

Preferably, the binder may comprise all three resins, namely the polyester resin prepared by polymerization of terephthalic acid, isophthalic acid, neopentylglycol, and ethyleneglycol, the resin derived from rosin, and the polyol resin.

The binder may only comprise the polyester resin, optionally the resin derived from rosin, and/or optionally the polyol resin, i.e. the binder then consists of the polyester resin and, optionally of the resin derived from rosin and/or optionally of the polyol resin.

Thus, the binder may only consist of the polyester resin; or of the polyester resin and of the resin derived from rosin; or of the polyester resin and of the polyol resin; or of the polyester resin, of the resin derived from rosin and of the polyol resin.

Among the compositions in which the binder consists of the polyester resin, of the resin derived from rosin and of the polyol resin, the preferred compositions are those wherein the weight proportions of the different resins based on the total weight of the binder, in other words based on the total weight of all the resins, are as follows: 30% to 60% of the polyester resin, 20% to 50% of the resin derived from rosin, and 15% to 40% of the polyol resin.

Inside the limited domain defined by these narrow ranges of weight percentages of each of the resins based on the total weight of the binder, the properties of the markings obtained with the ink compositions according to the invention are optimal, in particular the adherence notably on polyethylene and on polypropylene of the markings and their resistance notably to alcohol are optimal.

Or else the binder may comprise, in addition to the polyester resin, the optional rosin resin and/or the optional polyol resin, one or several other optional polymer(s) and/or resin(s).

Advantageously, this or these other polymer(s) and/or resin(s) may notably be selected from (meth)acrylic, vinylic, ketonic, hydroxyaromatic, cellulosic, styrenic, epoxy, polyurethanes, styrene-acrylates, alkoxysilanes, and combinations of two or more of the latter.

Advantageously, the binder represents from 1% to 45% by weight, preferably from 5% to 30% by weight, still preferably from 10% to 20% by weight, of the total weight of the ink composition according to the invention.

The ink composition according to the invention comprises a very small amount of water, generally less than 10% by weight, preferably less than 5%, still preferably, less than 1% by weight, based on the total weight of the ink composition.

The ink composition according to the invention may even be considered as being essentially free of water (0% water).

In fact, the water present is only the provided water found as an impurity in the diverse components of the ink. The greater the degree of purity of the selected components, the smaller will be the water content.

The low content or lack of water in the ink composition according to the invention promotes the formation of the ink film when the binders and other coloring materials (dyes, pigments) of the composition are insoluble in water, thereby improving the resistance and adherence properties of the ink.

In the composition according to the invention, the solvent generally represents at least 20% by weight of the total weight of the ink composition, preferably the solvent represents from 30% to 90% by weight, still preferably from 60% to 80% by weight, of the total weight of the ink composition.

The solvent comprises, preferably consists of, one or several organic solvent compound(s) and optionally water provided that the amount of water observes the conditions indicated above.

Advantageously, said organic solvent compound(s) comprise(s) a majority weight proportion, based on the total weight of the solvent (50% by weight of the total weight of the solvent or more, or even up to 100% by weight of the total weight of the solvent), of one or several volatile organic solvent compound(s), and a minority weight proportion, based on the total weight of the solvent, of one or several non-volatile organic solvent compound(s).

Preferably, the solvent consists of one or several volatile organic solvent compound(s).

By « volatile organic solvent compound », is generally meant that this compound has an evaporation rate of more than 0.5 on the scale where butyl acetate has an evaporation rate equal to 1.

Said organic solvent compound(s) being part of the solvent is(are) selected, for example from alcohols, in particular low molecular weight alcohols, for example aliphatic alcohols such as ethanol; ketones preferably with a low molecular weight; ethers of alkylene glycols; esters of alkylene glycols and esters of alkylene glycol ethers, such as acetates; dimethyl formamide; N-methyl pyrrolidone; acetals; esters; linear or cyclic ethers; aliphatic, cyclic or linear hydrocarbons; aromatic hydrocarbons; and carbonates such as propylene carbonate, ethylene carbonate and dimethyl- and diethyl-carbonates; and mixtures thereof.

Preferably, this or these solvent compound(s) has(have) the property of dissolving the other ingredients of the ink, notably the binder, the coloring materials, the additives, etc.

The alcohols will preferably be selected from linear or branched aliphatic alcohols with 1 to 8 carbon atoms, such as methanol, ethanol, propanol-1, propanol-2, n-butanol, butanol-2, tert-butanol, etc.

The ketones will preferably be selected from ketones with 3 to 10 carbon atoms, such as acetone, butanone (methyl-ethyl-ketone), pentanone-2 (methyl-propyl-ketone), methyl-3 butanone-2 (methyl-isopropyl-ketone) and methyl-4 pentanone-2 (methyl-isobutyl-ketone).

The ethers of alkylene glycols are preferably selected from mono-alkyl ethers (C₁-C₆ alkyl group) or dialkyl ethers (C₁ - C₆ alkyl groups) of alkylene glycol comprising from 1 to 10 carbon atoms in the alkylene chain, preferably these are ethers of ethylene or propylene glycol, such as methoxy-propanol.

The esters of alkylene glycols and the esters of alkylene glycol ethers are preferably selected from among the esters of those with saturated aliphatic carboxylic acids with 1 to 6 carbon atoms, such as formic acid, acetic acid, propionic acid, butyric acid, valeric acid and caproic acid.

Mention may for example be made of methoxypropyl acetate, butyldiglycol acetate, etc.

The esters are preferably selected from low molecular mass esters such as formates, acetates, propionates or butyrates of alcohols with 1 to 10 carbon atoms.

The acetals are preferably selected from low molecular mass acetals such as ethylal and methylal.

The ethers are preferably selected from among low molecular mass ethers like dioxolane or tetrahydrofurane.

The man skilled in the art may easily identify from among these solvent compounds those which are volatile and those which are not volatile.

A preferred solvent according to the invention comprises a majority amount by weight based on the total weight of the solvent, preferably consists of one or several solvent compound(s) selected from ketones with 3 to 10 carbon atoms, such as acetone, butanone (methyl-ethyl-ketone or MEK), pentanone-2 (methyl-propyl-ketone), methyl-3 butanone-2 (methyl-isopropyl-ketone) and methyl-4 pentanone-2 (methyl-isobutyl-ketone or MIK).

A particularly preferred solvent comprises a majority amount by weight based on the total weight of the solvent, of MEK, preferably consists of MEK.

This preferred solvent may further comprise one or several other solvent compounds, other than the ketone(s) in a total minority amount by weight, based on the total weight of the solvent, for example in an amount from 0.1% to 20% by weight, preferably from 5% to 15% by weight, based on the total weight of the solvent, in order to optimize the properties of the inks. These minority solvents may be selected from esters, ethers of ethylene glycol or of propylene glycol, and from acetals.

The dye(s) and/or pigment(s) may be selected from all the dyes or pigments suitable for the use sought, known to the man skilled in the art, some of these pigments or dyes have already been mentioned above.

The dyes and the pigments will generally be selected from dyes and pigments known under the name of « C. I. Solvent Dyes » and « C. I. Pigments ».

As an example, of the most common pigments and dyes, mention may be made of C.I. Solvent Black 7, C. I. Solvent Black 29, C. I. Solvent Black 27, C. I. Solvent Black 28, C. I. Solvent Black 35, C. I. Solvent Blue 45, C. I. Solvent Blue 70, C. I. Solvent Red 124, dispersions of Pigment Blue 60, Pigment Black 7, Pigment White 6 or Pigment Blue 15; or further fluorescent dyes; and optical brighteners.

The pigments also include lacquers.

When it is desired that the markings obtained with the ink composition according to the invention be resistant to water, a dye will preferably be selected for which the solubility in water is the lowest, which is insoluble in water.

By « dye insoluble in water », is generally meant a dye which, added 1% in demineralized water, does not cause coloration of the water visible to the eye.

Advantageously, the dye(s) is(are) selected from organic dyes soluble in ketones.

Advantageously, the pigment(s) may be selected from carbon blacks, titanium oxides, and mixtures thereof.

A preferred dye is C.I. Solvent Black 27.

The ink composition may be black or of a dark color.

Such a composition for example contains as a dye Solvent Black 27.

Such a composition will give a black marking or a marking having a dark color and is therefore particularly well adapted to the marking of white substrates or of a substrate having a light color.

Or else, according to an alternative, the ink composition may be opaque, preferably white or of a light color.

Such an opaque composition for example contains, as a pigment, titanium oxide TiO₂.

Such a composition will give a white or light color marking and is therefore particularly well adapted to the marking of black substrates or substrates having a dark color such as cables or pipes.

The total amount of dye(s) and/or pigment(s) is generally from 0.05% to 25% by weight, preferably from 1% to 20% by weight, still preferably from 3% to 10% by weight, of the total weight of the ink composition.

The ink composition may further comprise one or several plasticizers (of resin(s) or polymer(s) or compounds of the binder) for example selected from plasticizers known to the man skilled in the art and selected according to the binder used comprising one or several polymer(s) and/or resin(s), mention may be made as a plasticizer, for example of thermoplastic polyurethanes, phthalates, adipates, citrates and esters of citric acid, alkyl phosphates, glycerol, lactic acid, oleic acid, polypropylene glycol, fatty acid triglycerides, levulinic acid; and mixtures thereof.

The plasticizer(s) is(are) generally present in an amount of at least 0.05% by weight, preferably from 0.1% to 20% by weight, of the total weight of the ink composition.

The ink composition according to the invention may further optionally comprise at least one conductivity salt.

Indeed, as the ink composition according to the invention may be applied with a deflected continuous jet, it should have sufficient electric conductivity generally greater than 5 µS/cm at 20°C, preferably greater than or equal to 300 µS/cm at 20°C, still preferably greater than or equal to 500 µS/cm at 20°C.

The conductivity of the ink composition according to the invention may for example be from 5 to 5,000 µS/cm at 20°C, notably from 500 to 2,000 µS/cm at 20°C.

The products providing the ink with the conductivity required for projection with a continuous jet are ionizable compounds, such as salts. It is possible that dyes, pigments, or other ingredients of the ink are themselves salts and gives sufficient conductivity to the ink so that there is no need to add a conductivity salt strictly speaking: this is notably the case of compounds known under the name of « C. I. Solvent Black 27, 29, 35 and 45 », already mentioned.

However, it will often be necessary to include in the ink composition, additionally a conductivity salt different from the dyes, pigments and other ingredients.

By "conductivity salt", is meant a salt which provides electric conductivity to the ink composition.

This(these) conductivity salt(s) is(are) generally selected from alkaline metals, earth-alkaline metals and simple or quaternary ammonium salts, as nitrates, thiocyanates, formates, acetates, sulfates, propionates, hexafluorophosphates, hexafluoroantimonates etc.

When the markings obtained with the ink composition have to be resistant to water, this or these conductivity salts will be selected from those which are insoluble in water (i.e. generally, for which the solubility in water is less than 0.5% by weight), like quaternary ammoniums with a fatty chain and hexafluorophosphates or hexafluoroantimonates.

This(these) conductivity salt(s) will therefore be present, if necessary, in the ink composition so as to impart to the ink the conductivity above, in an amount generally of at least 0.05% by weight, preferably from 0.1% to 20% by weight, still preferably from 0,1% to 10% by weight, and better from 0.1% to 5% by weight, of the total weight of the ink composition.

The composition according to the invention may further comprise one or several additive(s) selected from compounds which improve the solubility of certain of these components, the printing quality, the adherence, or further the control of the wetting of the ink on various supports.

The additive(s) may be selected, for example from anti-foam agents; chemical stabilizers; UV stabilizers; surfactants, such as Fluorad® FC 430 or Byk® 333; agents inhibiting corrosion by salts such as conductivity salts; bactericides, fungicides and biocides; and pH regulating buffers, etc.

The additive(s) is (are) used at vary small doses, generally less than or equal to 5% and sometimes as low as 0.01%, depending on whether these are anti-foam agents, stabilizers or surfactants.

The invention further relates to a method for marking a substrate, support, or object by projecting on a surface of this substrate, support, or object an ink composition by the deflected continuous ink jet technique, in which the projected ink composition is the ink composition according to the invention as described in the foregoing.

Generally, before projecting the ink composition, the surface of the substrate, support or object is not subject to any surface treatment other than simple cleaning. In other words, the surface is not subject to any activation treatment.

The invention also relates to a substrate, support, or object provided with a marking obtained by drying, and/or absorption in the substrate, support, or object of the ink composition according to the invention.

This substrate may be porous or non-porous.

This substrate may be made of metal, for example made of aluminium, made of steel; made of glass; made of ceramic; made of a material containing cellulose such as paper, optionally coated or glossy, cardboard or wood; made of an organic polymer, notably made of a thermoplastic polymer, preferably selected from PVCs, PETs, polyolefins, such as polyethylenes (PE), and polypropylenes (PP); made of Poly(Methyl Methacrylate) (PMMA) also-called "Plexiglas"; made of fabric; or made of any other non-porous or porous substance, or made of a composite of several of the previous materials.

A preferred substrate is a substrate made of polyolefin, for example made of polyethylene or made of polypropylene.

The substrate, support or object may be a package or a container, such as a bottle, a flask or a tray; a stopper, plug or cap; a pipe or a cable; preferably made of a polyolefin, for example made of a polyethylene or made of a polypropylene.

The substrate may have any color.

Thus it may be white, of a light color or else black, of a dark color.

The color of the ink composition, and therefore notably the color of the pigment or dye of the ink composition, is generally selected so that the marking obtained with the ink composition has a color which is distinguished from the color of the substrate and more exactly from the color of the surface of the substrate provided with the marking.

As this was already indicated above, a black or dark colored ink composition, which gives a black or dark colored marking, is particularly well adapted to the marking of white substrates or of substrates with a light color.

On the other hand, an opaque ink composition, preferably white or of a light color, which gives a white marking or with a light color is particularly well adapted to the marking of black substrates or of substrates with a dark color such as cables or pipes.

The substrate, or rather the surface of the substrate, provided with the marking, may have any shape, even a complex shape, this may notably be a curved surface for example the surface of a package or container, such as a bottle, a flask or a tray, or the surface of a stopper, plug or cap, or further of the surface of a pipe or a cable.

Markings, prints of excellent quality and resistant on all the substrates even very little porous substrates, in particular on substrates made of polyolefins, for example made of polyethylene, even with complex shapes such as packages or containers such as bottles, flasks or trays; or stoppers; or further pipes or cables; made of a polyolefin, for example made of a polyethylene or made of a polypropylene are obtained.

The invention will be better understood upon reading the following description of embodiments of the invention, given as illustrative and non-limiting examples.

### EXAMPLES:

The following ink compositions, according to the invention, were prepared by mixing the products mentioned in table I below, in the indicated proportions. The viscosities of the obtained inks are also given in Table I below.

The electric conductivity could be measured with a commercially available conductimeter of the Radiometer® company.

The dynamic viscosities have been measured by means of a viscometer with coaxial cylinders of the « *Couette"* type of the Contraves® company.

**Table I**

| Constituents (weight percentages) | Example No. 1 | Ex. No. 2 | Ex. No. 3 | Ex. No. 4 | Ex. No. 5 | Ex. No. 6 | Ex. No. 7 | Ex. No. 8 | Ex. No. 9 | Ex. No. 10 | Ex. No. 11 |
|---|---|---|---|---|---|---|---|---|---|---|---|
| Methyl-ethyl ketone | 72.5 | 58 | 53.8 | 54 | 62 | 56.8 | 53.8 | 53.8 | 53.8 | 57.8 | 57.8 |
| Dowanol PMA® | | 3 | 3 | 3 | 4 | 4 | 3 | 3 | 3 | 3 | 3 |
| Polyester resin (Vylon GK 250® from Toyobo) | 12.4 | 10 | 9 | 10 | 13 | 10 | 7 | 7 | 7.9 | 9 | 10.1 |
| Rosin resin (Bremasin 1380® from Kraemer ®) | 8 | 8 | 7 | 8 | | | 10.6 | 8.4 | 5.5 | 3.6 | 4.3 |
| Polyol resin (Synthetic resin SK from Evonik®) | | | 6 | 4 | | 8 | 4.4 | 6.6 | 8.6 | 5.4 | 3.6 |
| Dispersion of TiO₂ at 65 in methyl-ethyl ketone | | 20 | 20 | 20 | 20 | 20 | 20 | 20 | 20 | 20 | 20 |
| Solvent Black 27 (black Neozapon® X51) | 6 | | | | | | | | | | |
| BYK UV3500® | 0.7 | | | | | | | | | | |
| Potassium thiocyanate | 0.4 | 1 | 1.2 | 1 | 1 | 1.2 | 1.2 | 1.2 | 1.2 | 1.2 | 1.2 |
| Viscosity (mPa.s) | 4.35 | 4.03 | 4.84 | 5.04 | 4.42 | 4.32 | 3.97 | 3.9 | 4.89 | 3.73 | 4.2 |

The ink of Example 1 is an ink of black color since it contains Solvent Black 27.

The ink of Examples 2 to 11 is an opaque ink of white color since it contains TiO₂.

The black ink of Example 1 was deposited by means of printers Markem-Imaje® 9040, which use the deflected continuous ink jet technique, on polyethylene flasks.

On identical flasks, made of polyethylene (HDPE) and made of polypropylene, the comparative black ink Markem-Imaje® referenced 5513 was deposited by means of Markem-Imaje® 9040 printers. This ink is used a control, as a comparative ink, since it is presently used for this application for marking flasks made of polyethylene or made of polypropylene.

This comparative ink does not comprise any polyester resin, and further it does not comprise any rosin resin, or polyol resin.

After 24 hours of drying, the markings on the polyethylene flasks were successively:
- rubbed with a finger by performing 10 (30) back and forth movements ("BFM");
- subject to soaking for a few minutes in water and the same rubbing test was repeated by carrying out as many as 30 back and forth movements;
- rubbed with a cotton impregnated with ethanol by carrying out up to 30 back and forth movements;
- subject to the « Scotch tape » test as already described above.

The white inks of Examples 2 to 11 were deposited by means of Markem-Imaje® 9040 printers, which use the deflected continuous ink jet technique, on polyethylene cables of dark color and on other supports made of polypropylene with a dark color.

On identical cables, made of polyethylene (HDPE) and made of polypropylene, a comparative white ink Markem-Imaje® referenced as 5137 was deposited by means of Markem-Imaje® 9040 printers. This ink is used as a control, a comparative ink, since it is presently used for this application for marking cables or tubes made of polyethylene or made of polypropylene.

This comparative ink does not comprise any polyester resin, and it further does not comprise any rosin resin, or polyol resin.

After 24 hours of drying, the markings on the polyethylene cables and on the polypropylene supports were successively:
- rubbed with a finger by performing 30 back and forth movements;
- subject to soaking for a few minutes in water and the same rubbing test was repeated by performing up to 30 back and forth movements;
- rubbed with a cotton impregnated with ethanol by carrying out up to 30 back and forth movements (BFM);

If the marking is already erased by carrying out a number of back and forth movements of less than 30, the number of (back and forth movements) ("BFM") for Example 3, 5, 8, or 10 is then noted so that the marking is erased.
- subject to the "Scotch tape" test as it has already been described above.

The results are summarized in the following Table II:

**Table II.**

| TESTED INKS | | Example No. 1 | Comparative Ex. 1: Ink 5513 | Ex No.2 | Ex. No.3 | Ex. No.4 | Ex No.5 | Ex No.6 | Ex. No.7 | Ex No.8 | Ex No.9 | Ex No.10 | Ex No.11 | Comparative Ex 2 : Ink 5137 |
|---|---|---|---|---|---|---|---|---|---|---|---|---|---|---|
| **HDPE bottle or cable** | Rubbing | **5** | **5** | **5** | **5** | **5** | **5** | **5** | **5** | **5** | **5** | **5** | **5** | **5** |
| | Scotch tape | **4** | **5** | **0** | **3** | **2** | **0.5** | **0.5** | **0.5** | **2** | **2** | **3** | **3** | **0** |
| | Rubbing Ethanol | **5** | **0** | **8 BFM** | **5 BFM** | **8 BFM** | **10 BFM** | **5 BFM** | **3 BFM** | **4 BFM** | **30 BFM** | **5 BFM** | **10 BFM** | **10 BFM** |
| | Rubbing H₂O | **5** | **5** | **5** | **5** | **5** | **5** | **5** | **5** | **5** | **5** | **5** | **5** | **5** |
| **PP Support** | Rubbing | **5** | **5** | **5** | **5** | **5** | **5** | **5** | **5** | **5** | **5** | **5** | **5** | **5** |
| | Test with the adhesive tape Scotch | **4** | **5** | **0** | **3** | **3** | **0** | **0.5** | **3** | **3** | **2** | **2** | **2** | **0** |
| | Rubbing H₂O | **5** | **5** | **5** | **5** | **5** | **5** | **5** | **5** | **5** | **5** | **5** | **5** | **5** |

| | | | | | | | | | | | | | | |
|---|---|---|---|---|---|---|---|---|---|---|---|---|---|---|
| The results of the tests were scored on a score scale ranging from 1 to 5. Note: 5 = unchanged marking 4 = 20% damaged marking 3 = 50% damaged or erased marking 2 = 80% damaged or erased marking 1 = totally erased marking Or else number of back and forth movements (BFM) so that the marking is erased when the marking is already erased by a number of back and forth movements of less than 30. | | | | | | | | | | | | | | |

The black ink of Example 1 according to the invention shows better performances than the comparative black ink 5513 and the white inks of Examples 2 to 11 according to the invention show better performances than the comparative white ink 5137.

## Claims

1. An ink composition for deflected continuous ink jet printing, liquid at room temperature, comprising:
a) a solvent comprising, preferably consisting of, one or several organic solvent compound(s) and optionally water; preferably, the solvent represents at least 20% by weight of the total weight of the ink composition, preferably the solvent represents from 30% to 90% by weight, still preferably from 60% to 80% by weight, of the total weight of the ink composition;
b) a binder, comprising at least one polyester resin prepared by polymerization of terephthalic acid, isophthalic acid, neopentylglycol, and ethyleneglycol; preferably, the ink composition comprises from 0.1% to 30% by weight, preferably from 5% to 20% by weight, of the total weight of the ink composition, of the polyester resin;
c) optionally one or several dye(s) and/or pigment(s); preferably, the total amount of dye(s) and/or of pigment(s) is from 0.05% to 25% by weight, preferably from 1% to 20% by weight, still preferably from 3% to 10% by weight, of the total weight of the ink composition;
said ink composition further comprising a resin derived from rosin; preferably, the ink composition comprises from 0.1% to 20% by weight, preferably from 1% to 15% by weight, of the total weight of the ink composition, of the resin derived from rosin.

2. The ink composition according to claim 1, which is free of halogenated compounds.

3. The ink composition according to any one of claims 1 to 2, further comprising a polyol resin; preferably, the ink composition comprises from 0.1% to 25% by weight, preferably from 2% to 10% by weight, of the total weight of the ink composition of the polyol resin.

4. The ink composition according to claims 1 and 3, wherein the binder comprises the polyester resin prepared by polymerization of terephthalic acid, isophthalic acid, neopentylglycol, and ethyleneglycol, the resin derived from rosin, and the polyol resin; preferably the binder consists of the polyester resin, the resin derived from rosin and the polyol resin; more preferably the binder consists of the polyester resin, the resin derived from rosin, and the polyol resin in the following weight proportions based on the total weight of the binder: 30% to 60% of the polyester resin, 20% to 50% of the resin derived from rosin, and 15% to 40% of the polyol resin.

5. The ink composition according to any one of the preceding claims, comprising less than 10% by weight, preferably less than 5% by weight, still preferably less than 1% by weight, and better 0% by weight of water, based on the total weight of the ink composition.

6. The ink composition according to any one of the preceding claims, wherein said organic solvent compound(s) comprise(s) a majority weight proportion, based on the total weight of the solvent, of one or several volatile organic solvent compound(s) and a minority weight proportion, based on the total weight of the solvent, of one or several non-volatile organic solvent compound(s); preferably, the solvent consists of one or several volatile organic solvent compound(s); by volatile organic solvent compound is meant that this compound has an evaporation rate of more than 0.5 on the scale where butyl acetate has an evaporation rate equal to 1.

7. The ink composition according to any of the preceding claims, wherein the solvent comprises a majority amount by weight, based on the total weight of the solvent, preferably consists of one or several solvent compound(s) selected from ketones with 3 to 10 carbon atoms, such as acetone, butanone (methyl-ethyl-ketone or MEK), pentanone-2 (methyl-propyl-ketone), methyl-3-butanone-2 (methyl-isopropylketone) and methyl-4-pentanone-2 (methyl-isobutyl-ketone or MIK).

8. The ink composition according to claim 7, further comprising one or several other solvent compound(s), other than the ketone(s) in a minority total amount by weight based on the total weight of the solvent, for example in an amount from 0.1% to 20% by weight, preferably from 5% to 15% by weight based on the total weight of the solvent.

9. The ink composition according to any one of the preceding claims, wherein said dye(s) and/or pigment(s) is(are) selected from dyes and pigments known under the name of « C. I. Solvent Dyes » and « C. I. Pigments », such as C. I. Solvent Black 29, C. I. Solvent Black 27, C. I. Solvent Black 7, C. I. Solvent Black 28, C. I. Solvent Black 35, C. I. Solvent Blue 45, C. I. Solvent Blue 70, C. I. Solvent Red 124, dispersions of Pigment Blue 60 or Pigment Blue 15, Pigment Black 7, Pigment White 6; fluorescent dyes; and optical brighteners.

10. The ink composition according to any one of the preceding claims, which is black or of a dark color; or which is opaque, preferably of white or light color.

11. The ink composition according to any one of the preceding claims, further comprising one or several plasticizers.

12. The ink composition according to any one of the preceding claims, which has an electric conductivity greater than 5 µS/cm at 20°C, preferably greater than or equal to 300 µS/cm at 20°C, still preferably greater than or equal to 500 µS/cm at 20°C.

13. The ink composition according to any one of the preceding claims, further comprising at least one conductivity salt, preferably selected from conductivity salts insoluble in water; preferably, the conductivity salt(s) is (are) present in an amount of at least 0.05% by weight, preferably in an amount from 0.1% to 20% by weight, still preferably from 0.1% to 10% by weight, better from 0.1% to 5% by weight, of the total weight of the ink composition.

14. The ink composition according to any one of the preceding claims, further comprising one or several additives selected from anti-foam agents; chemical stabilizers; UV stabilizers; surfactants; agents inhibiting corrosion by salts; bactericides, fungicides and biocides; and pH regulating buffers.

15. A method for marking a substrate, support or object by projecting on a surface of this substrate, support, or object an ink composition by the deflected continuous ink jet technique, wherein the projected ink composition is the ink composition according to any one of claims 1 to 14; preferably, before projecting the ink composition, the surface of the substrate, support, or object is not subject to any surface treatment other than a cleaning.

16. A substrate, support, or object provided with a marking obtained by drying, and/or absorption in the substrate, support, or object, of the ink composition according to any one of claims 1 to 14; preferably the substrate, support or object, is made of metal, for example made of aluminium, made of steel; made of glass; made of ceramic; made of a material containing cellulose such as paper, optionally coated or glossy, cardboard or wood; made of an organic polymer, notably made of a thermoplastic polymer, preferably selected from PVCs, PETs, polyolefins, such as polyethylenes (PE), and polypropylenes (PP); made of Poly(Methyl Methacrylate) (PMMA) also-called "Plexiglas"; made of fabric; or made of any other non-porous or porous substance, or made of a composite of several of the previous materials.

17. The substrate, support or object according to claim 16, which is a package or a container, such as a bottle, a flask, or a tray; a stopper; a pipe or a cable; preferably made of a polyolefin, for example made of a polyethylene or made of a polypropylene.

## Patentansprüche

1. Tintenzusammensetzung für abgelenkten kontinuierlichen Tintenstrahldruck, die bei Raumtemperatur flüssig ist, enthaltend:
a) ein Lösungsmittel enthaltend, vorzugsweise bestehend aus, einer oder mehreren Lösungsmittelverbindungen und optional Wasser; wobei vorzugsweise das Lösungsmittel mindestens 20 Gew.-% des Gesamtgewichts der Tintenzusammensetzung repräsentiert, wobei vorzugsweise das Lösungsmittel 30 Gew.-% bis 90 Gew.-%, noch bevorzugter 60 Gew.-% bis 80 Gew.-%, des Gesamtgewichts der Tintenzusammensetzung repräsentiert;
b) einen Binder, der mindestens ein Polyesterharz aufweist, das hergestellt wird durch Polymerisierung von Terephthalsäure, Isophthalsäure, Neopentylglycol und Ethylenglycol; wobei vorzugsweise die Tintenzusammensetzung 0,1 Gew.-% bis 30 Gew.-%, vorzugsweise 5 Gew.-% bis 20 Gew.-%, des Gesamtgewichts der Tintenzusammensetzung des Polyesterharzes aufweist;
c) optional einen oder mehreren Farbstoffen und/oder Pigmenten; wobei vorzugsweise der Gesamtanteil an Farbstoffen und/oder Pigmenten 0,05 Gew.-% bis 25 Gew.-%, vorzugsweise 1 Gew.-% bis 20 Gew.-%, noch bevorzugter 3 Gew.-% bis 10 Gew.-%, des Gesamtgewichts der Tintenzusammensetzung beträgt;
wobei die Tintenzusammensetzung ferner ein Harz aufweist, das aus Kolophonium abgeleitet ist; wobei vorzugsweise die Tintenzusammensetzung 0,1 Gew.-% bis 20 Gew.-%, vorzugsweise 1 Gew.-% bis 15 Gew.-%, des Gesamtgewichts der Tintenzusammensetzung des aus dem Kolophonium abgeleiteten Harzes aufweist.

2. Tintenzusammensetzung nach Anspruch 1, die frei von halogenierten Verbindungen ist.

3. Tintenzusammensetzung nach Anspruch 1 oder 2, die ferner ein Polyolharz aufweist; wobei vorzugsweise die Tintenzusammensetzung 0,1 Gew.-% bis 25 Gew.-%, vorzugsweise 2 Gew.-% bis 10 Gew.-%, des Gesamtgewichts der Tintenzusammensetzung des Polyolharzes aufweist.

4. Tintenzusammensetzung nach Anspruch 1 und 3, wobei der Binder das Polyesterharz, das durch Polymerisierung von Terephthalsäure, Isophthalsäure, Neopentylglycol und Ethylenglycol hergestellt ist, das aus dem Kolophonium abgeleitete Harz und das Polyolharz aufweist; wobei vorzugsweise der Binder aus dem Polyesterharz, dem aus dem Kolophonium abgeleiteten Harz und dem Polyolharz besteht; wobei noch bevorzugter der Binder aus dem Polyesterharz, dem aus dem Kolophonium abgeleiteten Harz und dem Polyolharz mit den folgenden Gewichtanteilen basierend auf dem Gesamtgewicht des Binders besteht: 30 % bis 60 % des Polyesterharzes, 20 % bis 50 % des aus dem Kolophonium abgeleiteten Harzes und 15 % bis 40 % des Polyolharzes.

5. Tintenzusammensetzung nach einem der vorhergehenden Ansprüche, enthaltend weniger als 10 Gew.-%, vorzugsweise weniger als 5 Gew.-%, noch bevorzugter weniger als 1 Gew.-%, und besser 0 Gew.-% an Wasser, bezogen auf das Gesamtgewicht der Tintenzusammensetzung.

6. Tintenzusammensetzung nach einem der vorhergehenden Ansprüche, wobei das eine oder die mehreren organischen Lösungsmittelverbindungen einen Mehrheitsgewichtsanteil, bezogen auf das Gesamtgewicht des Lösungsmittels, aus einer oder mehreren flüchtigen organischen Lösungsmittelverbindungen und einen Minderheitsgewichtsanteil, bezogen auf das Gesamtgewicht des Lösungsmittels, aus einem oder mehreren nichtflüchtigen organischen Lösungsmittelverbindungen aufweist; wobei vorzugsweise das Lösungsmittel aus einem oder mehreren flüchtigen organischen Lösungsmittelverbindungen besteht; wobei eine flüchtige organische Lösungsmittelverbindung bedeutet, dass diese Verbindung eine Verdampfungsrate von mehr als 0,5 auf einer Skala hat, auf der Butylacetat eine Verdampfungsrate von 1 hat.

7. Tintenzusammensetzung nach einem der vorhergehenden Ansprüche, wobei das Lösungsmittel einen Mehrheitsgewichtsanteil, bezogen auf das Gesamtgewicht des Lösungsmittels, aufweist, wobei es bevorzugterweise aus einer oder mehreren Lösungsmittelverbindungen besteht, die ausgewählt sind aus Ketonen mit 3 bis 10 Kohlenstoffatomen, wie etwa Aceton, Butanon(methyl-ethyl-keton oder MEK), Pentanon-2-(methyl-propyl-keton), Methyl-3-butanon-2(methyl-isopropylketon) und Methyl-4-pentanon-2(methyl-isobutyl-keton oder MIK).

8. Tintenzusammensetzung nach Anspruch 7, die ferner ein oder mehrere andere Lösungsmittelverbindungen, die nicht das eine oder die mehreren Ketone sind, in einem Minderheitsgesamtgewichtsanteil, bezogen auf das Gesamtgewicht des Lösungsmittels, aufweist, beispielweise mit einem Anteil von 0,1 Gew.-% bis 20 Gew.-%, vorzugsweise 5 Gew.-% bis 15 Gew.-%, bezogen auf das Gesamtgewicht des Lösungsmittels.

9. Tintenzusammensetzung nach einem der vorhergehenden Ansprüche, wobei der eine oder die mehreren Farbstoffe und/oder Pigmente ausgewählt sind aus Farbstoffen und Pigmenten, die unter dem Namen "C. I. Lösungsmittelfarbstoffe" und "C. I. Pigmente", bekannt sind, wie etwa C. I. Lösungsmittelschwarz 29, C. I. Lösungsmittelschwarz 27, C. I. Lösungsmittelschwarz 7, C. I. Lösungsmittelschwarz 28, C. I. Lösungsmittelschwarz 35, C. I. Lösungsmittelblau 45, C. I. Lösungsmittelblau 70, C. I. Lösungsmittelrot 124, Dispersionen von Pigmentblau 60 oder Pigmentblau 15, Pigmentschwarz 7, Pigmentweiß 6; fluoreszierenden Farbstoffen; und optischen Aufhellungsmitteln.

10. Tintenzusammensetzung nach einem der vorhergehenden Ansprüche, die schwarz oder von dunkler Farbe ist; oder die undurchsichtig, vorzugsweise weiß oder von heller Farbe ist.

11. Tintenzusammensetzung nach einem der vorhergehenden Ansprüche, die ferner ein oder mehrere Plastiziermittel aufweist.

12. Tintenzusammensetzung nach einem der vorhergehenden Ansprüche, die eine elektrische Leitfähigkeit von größer 5 µS/cm bei 20 °C hat, vorzugsweise von größer oder gleich 300 µS/cm bei 20 °C, noch bevorzugter größer oder gleich 500 µS/cm bei 20 °C.

13. Tintenzusammensetzung nach einem der vorhergehenden Ansprüche, die ferner mindestens ein leitfähiges Salz aufweist, das vorzugsweise ausgewählt ist aus leitfähigen Salzen, die in Wasser unlöslich sind; wobei vorzugsweise das eine oder die mehreren leitenden Salze mit einem Anteil von mindestens 0,05 Gew.-%, vorzugsweise mit einem Anteil von 0,1 Gew.-% bis 20 Gew.-%, noch bevorzugter von 0,1 Gew.-% bis 10 Gew.-%, besser von 0,1 Gew.-% bis 5 Gew.-% des Gesamtgewichts der Tintenzusammensetzung vorhanden sind.

14. Tintenzusammensetzung nach einem der vorhergehenden Ansprüche, die ferner ein oder mehrere Additive aufweist, die ausgewählt sind aus Schaumverhinderungsmitteln; chemischen Stabilisierungsmitteln; UV-Stabilisierungsmitteln; Tensiden; Mitteln, die Korrosion durch Salze verhindern; Bakteriziden, Fungiziden und Bioziden; und pH-regulierenden Puffermitteln.

15. Verfahren zum Markieren eines Substrats, eines Trägers oder eines Objekts durch Sprühen einer Tintenzusammensetzung auf eine Oberfläche dieses Substrats, Trägers oder Objekts durch abgelenkte kontinuierliche Tintenstrahltechnik, wobei die aufgebrachte Tintenzusammensetzung die Tintenzusammensetzung nach einem der Ansprüche 1 bis 14 ist; wobei vorzugsweise vor dem Sprühen der Tintenzusammensetzung die Oberfläche des Substrats, Trägers oder Objekts nicht einer Oberflächenbehandlung oder einer Reinigungsbehandlung unterzogen wird.

16. Substrat, Träger oder Objekt, das bzw. der mit einer Markierung versehen ist, die durch Trocknen und/oder Absorption in dem Substrat, Träger oder Objekt der Tintenzusammensetzung nach einem der Ansprüche 1 bis 14 erhalten wird, wobei vorzugsweise das Substrat, der Träger oder das Objekt aus Metall hergestellt ist, beispielsweise aus Aluminium hergestellt, aus Stahl hergestellt; aus Glas hergestellt ist; aus Keramik hergestellt ist; aus einem Material hergestellt ist, das Zellulose, wie etwa Papier, optional beschichtet oder glänzend, Karton oder Holz enthält; aus einem organischen Polymer hergestellt ist, insbesondere aus einem thermoplastischen Polymer hergestellt ist, das bevorzugt ausgewählt ist aus PVCs, PETs, Polyolefinen, wie etwa Polyethylenen (PE) und Polypropylenen (PP); aus Poly(methylmethacrylat) (PMMA), auch als "Plexiglas" bezeichnet, hergestellt ist; aus Stoff hergestellt ist; oder aus einer beliebigen anderen nichtporösen oder porösen Substanz hergestellt ist, oder aus einem Komposit mehrerer der vorhergehenden Materialien hergestellt ist.

17. Substrat, Träger oder Objekt nach Anspruch 16, das bzw. der eine Verpackung oder ein Behälter ist, etwa eine Flasche, ein Fläschchen oder eine Schale; ein Stoppelement; eine Leitung oder ein Kabel; vorzugsweise hergestellt aus Polyolefin, beispielsweise hergestellt aus Polyethylen oder hergestellt aus Polypropylen.

## Revendications

1. Composition d'encre pour l'impression par jet continu dévié, liquide à la température ambiante, comprenant :
a) un solvant comprenant, de préférence constitué par, un ou plusieurs composé(s) solvant(s) organique(s), et éventuellement de l'eau ; de préférence, le solvant représente au moins 20% en poids du poids total de la composition d'encre, de préférence le solvant représente de 30% à 90% en poids, de préférence encore de 60% à 80% en poids, du poids total de la composition d'encre ;
b) un liant, comprenant au moins une résine polyester préparée par polymérisation d'acide téréphtalique, d'acide isophtalique, de néopentylglycol, et d'éthylèneglycol ; de préférence, la composition d'encre comprend de 0,1% à 30% en poids, de préférence de 5% à 20% en poids, du poids total de la composition d'encre, de la résine polyester ;
c) éventuellement, un ou plusieurs colorant(s) et/ou pigment(s) ; de préférence, la quantité totale de colorant(s) et/ou de pigment(s) est de 0,05% à 25% en poids, de préférence de 1% à 20% en poids, de préférence encore de 3% à 10% en poids, du poids total de la composition d'encre ;
ladite composition d'encre comprenant en outre une résine dérivée de la colophane ; de préférence, la composition d'encre comprend de 0,1% à 20% en poids, de préférence de 1% à 15% en poids, du poids total de la composition d'encre, de la résine dérivée de colophane.

2. Composition d'encre selon la revendication 1, qui est exempte de composés halogénés.

3. Composition d'encre selon l'une quelconque des revendications 1 à 2, comprenant en outre une résine polyol : de préférence, la composition d'encre comprend de 0,1% à 25% en poids, de préférence de 2% à 10% en poids, du poids total de la composition d'encre de la résine polyol.

4. Composition d'encre selon les revendications 1, et 3 dans laquelle le liant comprend la résine polyester préparée par polymérisation d'acide téréphtalique, d'acide isophtalique, de néopentylglycol, et d'éthylèneglycol, la résine dérivée de colophane, et la résine polyol ; de préférence, le liant est constitué par la résine polyester, la résine dérivée de colophane et la résine polyol ; de préférence encore le liant est constitué par la résine polyester, la résine dérivée de colophane, et la résine polyol dans les proportions en poids suivantes par rapport au poids total du liant : 30% à 60% de la résine polyester, 20% à 50% de la résine dérivée de colophane, et 15% à 40% de la résine polyol.

5. Composition d'encre selon l'une quelconque des revendications précédentes, comprenant moins de 10% en poids, de préférence moins de 5% en poids, de préférence encore moins de 1% en poids, et mieux 0% en poids d'eau, par rapport au poids total de la composition d'encre.

6. Composition d'encre selon l'une quelconque des revendications précédentes, dans laquelle le ou lesdits composé(s) solvant(s) organique(s) comprend(comprennent) une proportion majoritaire en poids, par rapport au poids total du solvant, d'un ou plusieurs composé(s) solvant(s) organique(s) volatil(s), et une proportion minoritaire en poids, par rapport au poids total du solvant, d'un ou plusieurs composé(s) solvant(s) organique(s) non volatil(s) ; de préférence, le solvant est constitué par un ou plusieurs composé(s) solvant(s) organique(s) volatil(s) ; par composé solvant volatil on entend que ce composé a une vitesse d'évaporation supérieure à 0,5 sur l'échelle où l'acétate de butyle a une vitesse d'évaporation égale à 1.

7. Composition d'encre selon l'une quelconque des revendications précédentes, dans laquelle le solvant comprend une quantité majoritaire en poids, par rapport au poids total du solvant, de préférence est constitué, d'un ou plusieurs composé(s) solvant(s) choisi(s) parmi les cétones de 3 à 10 atomes de carbone, telles que l'acétone, la butanone (méthyl-éthyl-cétone ou MEK), la pentanone-2 (méthyl-propyl-cétone), la méthyl-3 butanone-2 (méthyl-isopropylcétone) et la méthyl-4 pentanone-2 (méthyl-isobutyl-cétone ou MIK).

8. Composition d'encre selon la revendication 7, comprenant en outre un ou plusieurs autres composé(s) solvant(s) autres que la (les) cétone(s) en une quantité totale minoritaire en poids par rapport au poids total du solvant, par exemple en une quantité de 0,1% à 20% en poids, de préférence de 5% à 15% en poids par rapport au poids total du solvant.

9. Composition d'encre selon l'une quelconque des revendications précédentes, dans laquelle ledit ou lesdits colorant(s) et/ou pigment(s) est(sont) choisi(s) parmi les colorants et pigments connus sous la dénomination de « C. I. Solvent Dyes » et « C. I. Pigments », tels que les C. I. Solvent Black 29, C. I. Solvent Black 27, C. I. Solvent Black 7, C. I. Solvent Black 28, C. I. Solvent Black 35, C. I. Solvent Blue 45, C. I. Solvent Blue 70, C. I. Solvent Red 124, les dispersions de Pigment Blue 60 ou de Pigment Blue 15, Pigment Black 7, Pigment White 6 ; les colorants fluorescents ; et les azurants optiques.

10. Composition d'encre selon l'une quelconque des revendications précédentes, qui est noire ou de couleur foncée ; ou qui est opaque, de préférence de couleur blanche ou claire.

11. Composition d'encre selon l'une quelconque des revendications précédentes, comprenant en outre un ou plusieurs plastifiant(s).

12. Composition d'encre selon l'une quelconque des revendications précédentes, qui a une conductivité électrique supérieure à 5 µS/cm à 20°C, de préférence supérieure égale à 300 µS/cm à 20°C, de préférence encore supérieure ou égale à 500 µS/cm à 20°C.

13. Composition d'encre selon l'une quelconque des revendications précédentes, comprenant en outre au moins un sel de conductivité, choisi de préférence parmi les sels de conductivité insolubles dans l'eau; de préférence, le(s) sel(s) de conductivité est (sont) présent(s) à raison d'au moins 0,05% en poids, de préférence à raison de 0,1% à 20% en poids, de préférence encore de 0,1% à 10% en poids, mieux de 0,1% à 5% en poids, du poids total de la composition d'encre.

14. Composition d'encre selon l'une quelconque des revendications précédentes, comprenant, en outre, un ou plusieurs additif(s) choisi(s) parmi les agents anti-mousse ; les stabilisants chimiques ; les stabilisants UV ; les agents tensio-actifs ; les agents inhibant la corrosion par les sels; les bactéricides, les fongicides et les biocides ; et les tampons régulateurs de pH.

15. Procédé de marquage d'un substrat, support ou objet par projection sur une surface de ce substrat, support, ou objet d'une composition d'encre par la technique du jet continu dévié, dans lequel la composition d'encre projetée est la composition d'encre selon l'une quelconque des revendications 1 à 14 ; de préférence, préalablement à la projection de la composition d'encre, on ne soumet la surface du substrat, support, ou objet, à aucun traitement de surface autre qu'un simple nettoyage.

16. Substrat, support, ou objet pourvu d'un marquage obtenu par séchage, et/ou absorption dans le substrat, support, ou objet, de la composition d'encre selon l'une quelconque des revendications 1 à 14 ;de préférence, le substrat, support ou objet, est en métal, par exemple, en aluminium, en acier; en verre; en céramique; en un matériau contenant de la cellulose tel que du papier, éventuellement couché ou glacé, du carton ou du bois ; en un polymère organique, notamment en un polymère thermoplastique, choisi de préférence parmi les PVC, les PET, les polyoléfines, telles que les polyéthylènes (PE), et les polypropylènes (PP) ; en Poly(Méthacrylate de Méthyle) (PMMA) aussi appelé « Plexiglas » ; en tissu ; ou en toute autre substance non poreuse ou poreuse, ou en un composite de plusieurs des matériaux précédents.

17. Substrat, support ou objet selon la revendication 16, qui est un emballage ou un récipient, tel qu'une bouteille, un flacon, ou une barquette ; un bouchon ; un tuyau ou un câble ; de préférence en une polyoléfine, par exemple en un polyéthylène ou en un polypropylène.
